# FASCICULE DE BREVET EUROPEEN

(11) **EP 2 987 036 B1**
(45) Date de publication et mention de la délivrance du brevet: **11.08.2021**
(21) Numéro de dépôt: 14719705.7
(22) Date de dépôt: 18.04.2014
(51) Int. Cl.: G01S 19/20, G05B 9/03

(54) **PROCEDE DE CONTROLE D'INTEGRITE ET DISPOSITIF DE FUSION-CONSOLIDATION COMPRENANT UNE PLURALITE DE MODULES DE TRAITEMENT**
INTEGRITÄTSSTEUERUNGSVERFAHREN UND FUSIONS-/KONSOLIDIERUNGSVORRICHTUNG MIT MEHREREN VERARBEITUNGSMODULEN
INTEGRITY CONTROL METHOD AND MERGING/CONSOLIDATION DEVICE COMPRISING A PLURALITY OF PROCESSING MODULES

(30) Priorité: 18.04.2013 FR 1300917
(43) Date de publication de la demande: 24.02.2016
(73) Titulaire: Safran Electronics & Defense, 92100 Boulogne-Billancourt (FR)
(72) Inventeur: ROBERFROID, David, F-92100 Boulogne-Billancourt (FR); DEMANGE, Jean-Luc, F-92100 Boulogne-Billancourt (FR); DESTELLE, Michel, F-92100 Boulogne-Billancourt (FR); BECHERET, Yves, F-92100 Boulogne-Billancourt (FR)
(74) Mandataire: Regimbeau
(86) Numéro de dépôt international: PCT/EP2014/057996
(87) Numéro de publication internationale: WO 2014/170478

(56) Documents cités:
- FR-A1- 2 939 900
- None

## Description

La présente invention se rapporte au contrôle d'intégrité dans les systèmes de navigation.

Elle concerne plus particulièrement un procédé et un dispositif de contrôle d'intégrité pour des modules de traitement utilisant des mesures inertielles issues d'une Unité de Mesure Inertielle (également appelée UMI dans la suite du texte) ainsi que des mesures issues de signaux de constellations de satellites de radionavigation. Dans la suite du texte, ces mesures seront appelée mesures issues d'un dispositif de navigation.

Elle est également applicable à des informations de mesures issues exclusivement de signaux de constellations de satellites de radionavigation.

### DOMAINE TECHNIQUE GENERAL

Il est classique d'utiliser pour la navigation notamment des aéronefs ou encore des navires des équipements hybrides INS/GNSS (de l'anglo-saxon « Inertial Navigation System » et « Global Navigation Satellite System »).

Un équipement inertiel, utilisant les informations d'une UMI pour calculer des informations de localisation, de vitesse et d'orientation, fournit des informations peu bruitées et précises à court terme. Cependant, sur le long terme, les performances en localisation de cet équipement inertiel se dégradent (plus ou moins vite en fonction de la qualité des capteurs, accéléromètres ou gyroscopes par exemple, et des traitements réalisés). Si les informations provenant d'un système de radionavigation satellitaire sont quant à elles très peu susceptibles de dériver sur le long terme, elles sont cependant souvent bruitées et d'une précision variable. Par ailleurs, les mesures inertielles sont toujours disponibles alors que les informations GNSS ne le sont pas et sont susceptibles d'être leurrées et brouillées.

L'hybridation INS/GNSS combine les informations fournies par l'UMI et les mesures fournies par un ou plusieurs récepteurs de radionavigation satellitaire fonctionnant éventuellement sur des constellations différentes pour obtenir des informations de position et de vitesse tirant avantage des deux sources. La précision des mesures fournies par le ou les récepteurs GNSS permet de maîtriser la dérive inertielle et les mesures inertielles peu bruitées permettent de filtrer le bruit sur les mesures du récepteur.

Les systèmes de navigation aéronautique modernes calculent un rayon de protection autour de la position fournie qui limite l'erreur de position vraie à un risque d'intégrité donné. C'est ce couple constitué du rayon de protection et du niveau d'intégrité associé qui définit l'intégrité de la position fournie.

Cette approche est également valable pour d'autres variables que la position au sol (latitude, longitude) et notamment pour des informations monodimensionnelles comme l'altitude, pour lequel on calcule également classiquement des distances de protection. FR2939900 divulgue un dispositif d'hybridation en boucle fermée intégré par construction.

### PRESENTATION DE L'INVENTION

Un but de l'invention est de proposer un procédé de contrôle d'intégrité d'informations qui détermine des rayons de protection tenant compte d'événements ou défaillances particulièrement rares, par exemple présentant une probabilité d'occurrence par heure de fonctionnement inférieure à 10⁻⁷. Dans ce cas il devient nécessaire de tenir compte d'événements qui ont des probabilités d'apparitions par heure de fonctionnement habituellement négligées.

On peut citer comme exemple d'événements très rares affectant potentiellement l'information de position ou de vitesse, la double panne non indiquée de satellites de radionavigation, la double panne non indiquée d'UMI ou encore la panne globale non indiquée d'un système de radionavigation dont le taux d'apparition est de l'ordre de 10⁻⁸/fh dans le cas du système de radionavigation GPS Navstar).

À cet effet, il est proposé un procédé de contrôle de l'intégrité de la valeur d'une information de navigation délivrée par un dispositif de fusion-consolidation comprenant une pluralité de modules de traitement élaborant chacun une solution de navigation à partir de mesures provenant d'un ou plusieurs dispositifs de navigation indépendants, selon lequel on détermine pour chaque module de traitement un rayon de protection, correspondant à une probabilité de défaillance donnée,
caractérisé en ce qu'on détermine au moins une zone consolidée qui englobe des zones de protection qui sont centrées sur les valeurs de solution en sortie des modules de traitement et qui correspondent aux rayons de protection déterminés pour ces modules, le rayon de protection dudit dispositif de fusion-consolidation pour ladite probabilité de défaillance étant lui-même déterminé pour correspondre à ladite zone consolidée.

Dans le cas d'informations de mesures issues exclusivement d'un système de radionavigation, le module de traitement réalise par exemple le traitement d'intégrité autonome de position réalisé par le récepteur (connu sous le sigle P-RAIM) et son équivalent pour la vitesse (V-RAIM) pour calculer les valeurs associées de rayons de protection. Dans le cas d'informations issues d'une d'UMI et de GNSS, le module de traitement réalise par exemple une hybridation et un traitement d'intégrité de type AAIM.

Un tel procédé est avantageusement complété par les différentes caractéristiques suivantes prises seules ou selon toutes leurs combinaisons possibles :
- lorsque les mesures d'au moins un dispositif de navigation sont utilisées en entrée de deux modules de traitement, les autres dispositifs de navigation dont les mesures sont utilisées en entrée respectivement de l'un et l'autre de ces deux modules de traitement sont choisis de façon à être indépendants quant à leur défaillance éventuelle ;
- lorsqu'au moins deux dispositifs de navigation sont dépendants quant à leur défaillance éventuelle, au moins deux modules de traitement qui utilisent les mesures respectivement de l'un et l'autre de ces dispositifs de navigation sont tels que les autres dispositifs de navigation qu'ils utilisent en entrée sont indépendants quant à leur défaillance éventuelle ;
- après détermination d'un centre de cercle consolidé on détermine le rayon dudit cercle consolidé comme étant celui d'un cercle englobant, les cercles centrés sur les valeurs de solution en sortie des modules de traitement et dont les rayons sont égaux aux rayons de protection de ceux-ci ;
- le cercle englobant est le cercle de rayon minimal englobant les cercles centrés sur les valeurs de solution en sortie des modules de traitement;
- on détermine le centre du cercle consolidé comme étant égal à la moyenne, le cas échéant pondérée, des valeurs de solution en sortie des différents modules de traitement ;
- on met en œuvre en sortie des modules de traitement la détection et l'exclusion d'éventuelles défaillances ;
- on met en œuvre sur les sorties des modules de traitement des tests de cohérence en fonction desquels on détecte d'éventuelles défaillances ;
- les sorties des tests de cohérence sont analysées pour détecter sur les données correspondant à ces sorties des signatures caractéristiques de certaines défaillances ;
- les dispositifs de navigation commun à un module de traitement sont des UMI ainsi que des récepteurs de radionavigation, et dans lequel un traitement mis en oeuvre sur les sorties des modules de traitement ou sur les mesures en entrée de ceux-ci détecte la défaillance d'un ou plusieurs satellite(s) et/ou d'une unité de mesure inertielle et/ou d'un système GNSS et/ou d'un récepteur GNSS et/ou d'un type d'UMI ;
- on met en œuvre au niveau des modules de traitement une détection de panne de matériel UMI.

Il est également proposé un dispositif de fusion-consolidation comprenant une pluralité de modules de traitement élaborant chacun une solution de navigation hybride à partir de mesures provenant d'un ou plusieurs dispositifs de navigation indépendants, ledit dispositif fusion-consolidation comportant des moyens de traitement qui déterminent pour chaque module de traitement un rayon de protection, correspondant à une probabilité de défaillance donnée, caractérisé en ce qu'il comporte un module de consolidation qui détermine au moins une zone consolidée qui englobe des zones de protection qui sont centrées sur les valeurs de solution en sortie des modules de traitement et qui correspondent aux rayons de protection déterminés pour ces modules, le rayon de protection dudit dispositif de fusion-consolidation pour ladite probabilité de défaillance étant lui-même déterminé pour correspondre à ladite zone consolidée.

### PRESENTATION DES FIGURES

D'autres caractéristiques et avantages de l'invention ressortiront encore de la description qui suit, laquelle est purement illustrative et non limitative et doit être lue en regard des dessins annexés sur lesquels :
- La figure 1 illustre une architecture d'un dispositif de fusion-consolidation associé à des modules de traitements de type navigation hybride inertie/GNSS conforme à un mode de réalisation de l'invention ;
- La figure 2 illustre schématiquement une mise en oeuvre possible de l'invention ;
- Les figures 3a à 3e illustrent différents exemples de signatures caractéristiques de modes de défaillance susceptibles d'être détectés dans un mode de mise en oeuvre de l'invention ;
- Les figures 4,5 et 6 illustrent des exemples d'architecture de consolidation possibles pour un dispositif de navigation conforme à un mode de réalisation de l'invention.

### DESCRIPTION D'UN OU PLUSIEURS MODES DE MISE EN ŒUVRE ET DE REALISATION

### Exemple d'architecture et de consolidation

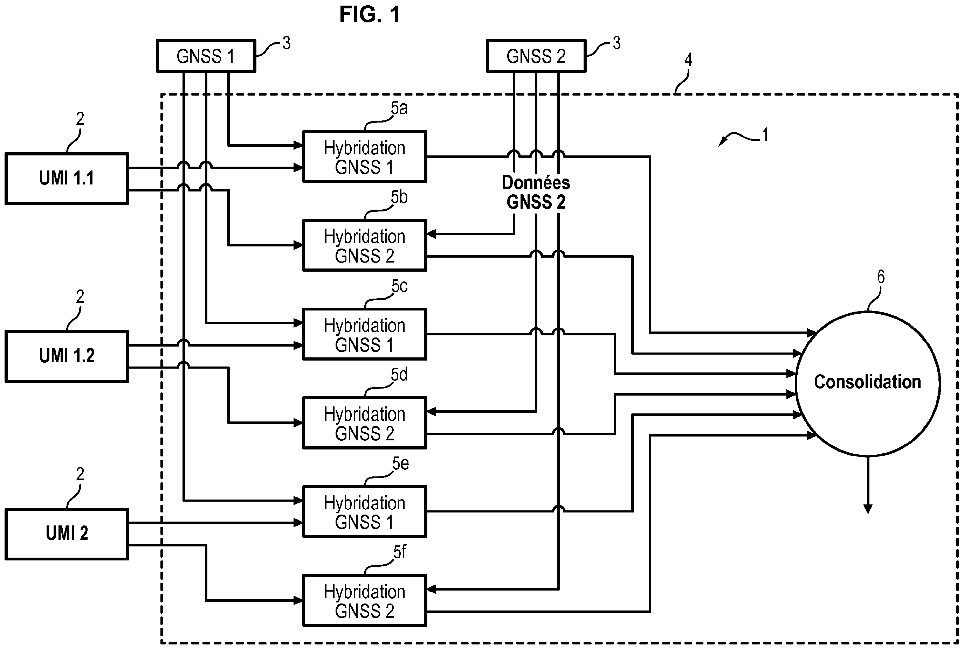

En référence à la figure 1, on a représenté schématiquement un système de navigation 1 qui est par exemple embarqué sur un aéronef ou un navire (ou destiné à l'être).

Ce système de navigation 1 utilise différents dispositifs de navigation UMI et GNSS et comporte, à cet effet, différentes unités de mesures inertielles 2, ainsi que des récepteurs 3 de signaux GNSS de différents types de constellations. Il comporte en outre un dispositif de fusion-consolidation 4 (plateforme de calcul) qui comporte d'une part six modules de traitement 5a à 5f du type à filtres de Kalman et d'autre part un module de consolidation 6.

Plus particulièrement, dans l'exemple illustré, il est prévu trois unités 2 de mesures inertielles UMI1.1, UMI1.2 et UMI2, les deux premières étant du même type (type 1), la troisième étant quant à elle d'un autre type (type 2). Les récepteurs 3 permettent des pseudo-mesures sur au moins deux constellations de satellites, l'une GNSS 1 étant par exemple une constellation GPS, l'autre GNSS 2 étant par exemple une constellation GALILEO ou GLONASS.

Chaque module de traitement 5a à 5f reçoit :
- des données en sortie d'une unité 2, mesures d'incréments inertiels réalisées par les capteurs (gyroscopes, accéléromètres) de l'unité
- et des données de pseudo-mesures en sortie d'un récepteur 3.

Notamment, le module 5a reçoit à la fois des données GNSS1 et des données de l'unité UMI1.1, le module 5b des données GNSS2 et des données de l'unité UMI1.1, le module 5c des données GNSS1 et des données de l'unité UMI1.2, le module 5d des données GNSS2 et des données de l'unité UMI1.2, le module 5e des données GNSS1 et des données de l'unité UMI2, le module 5f, enfin, recevant des données GNSS2 et des données de unité UMI2 (cf. tableau ci-dessous).

| | **GNSS 1** | **GNSS2** |
|---|---|---|
| **UMI 1.1** | (5a) HYB UMI1.1+ GNSS1 | (5b) HYB UMI1.1+ GNSS2 |
| **UMI 1.2** | (5c) HYB UMI 1.2+ GNSS1 | (5d) HYB UMI 1.2+ GNSS2 |
| **UMI 2** | (5e) HYB UMI 2+ GNSS1 | (5f) HYB UMI 2+ GNSS2 |

Les algorithmes mis en oeuvre au niveau des modules 5a à 5f de traitement peuvent être de tout type connu, par exemple de type AAIM. Des rayons de protection pour des probabilités de défaillance données sont calculés par les modules de traitement 5a à 5f dans le cadre de la mise en oeuvre de ces algorithmes.

Pour des exemples détaillés de calcul de rayons de protection réalisé au niveau d'un module de traitement, on pourra avantageusement se référer à la demande de brevet EP2374022 (A1) déposé par la demanderesse et intitulé 'Dispositif d'hybridation en boucle fermée intègre par construction'.

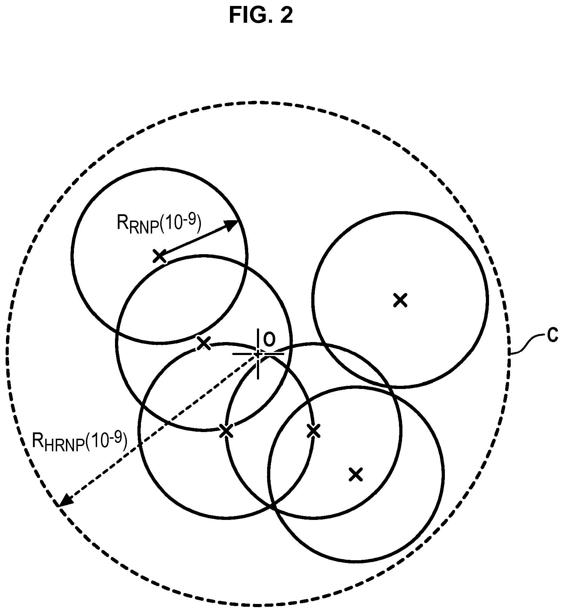

La consolidation mise en oeuvre par le module de consolidation 6 détermine pour chaque module de traitement 5a à 5f, un cercle dont le rayon est égal au rayon de protection dudit module pour la probabilité de défaillance recherchée et dont le centre est la valeur de la solution fournie en sortie du traitement par ledit module (cercles en traits pleins sur la figure 2).

Dans l'exemple illustré, six modules de traitement sont réalisés et l'on dispose ainsi de six cercles.

Le module 6 détermine en outre à partir de ces six cercles un cercle englobant (cercle en traits pointillés). Différentes méthodologies de détermination peuvent être utilisées.

On détermine le centre O du cercle consolidé en fonction des valeurs en sortie des différents modules de traitement 5a à 5f. Par exemple, le centre O de ce cercle peut être choisi comme la moyenne, le cas échéant pondérée, des valeurs de solutions en sortie des modules de traitement 5a à 5f.

Une fois ce centre O choisi, le cercle retenu C peut être alors choisi comme le cercle englobant de rayon minimal, ou tout autre cercle englobant.

Le rayon R de ce cercle C est alors utilisé comme rayon de protection, pour la probabilité de protection. On notera que la variable pour laquelle un rayon de protection est ainsi déterminé peut être une information bidimensionnelle de position au sol ou de vitesse ou encore être une information monodimensionnelle, par exemple d'altitude ou de vitesse azimutale.

Le rayon de protection correspond à une erreur maximale pour une probabilité donnée d'apparition d'erreur.

### Illustration d'une mise en œuvre

### Définitions

Dans la suite du texte, on définit la condition (ou hypothèse) restrictive « RNP » (pour Rare Normal Performance) comme la présence éventuelle de pannes ou évènements simples ou combinés au niveau d'un UMI, d'un récepteur GNSS ou d'une constellation ou encore d'une combinaison de pannes au niveau de ces différents éléments pouvant arriver avec une probabilité par heure de vol supérieure à 10⁻⁷/fh.

On définit la condition (ou hypothèse) restrictive « HRNP » (pour Hyper Rare Normal Performance) comme la présence éventuelle de pannes ou évènements au niveau d'un UMI, d'un récepteur GNSS ou d'une constellation ou encore d'une combinaison de pannes au niveau de ces différents éléments pouvant arriver avec une probabilité par heure de vol inférieure à 10⁻⁷/fh et supérieure à 10⁻⁹ /fh. Parmi les pannes prises en compte en HRNP mais pas en RNP figurent :
- Deux pannes non indiquées satellite sur une constellation « HRNP GNSS1 » ou « HRNP GNSS2 »
- Panne globale non indiquée de constellation ou panne non indiquée de récepteur « HRNP GNSS1 » ou « HRNP GNSS2 »
- Modes commun UMI de type 1 (panne simultanée sur UMI1.1 et UMI1.2) « HRNP UMI T1 »
- Panne non indiquée simultanée de deux UMI de type différent « HRNP UMI T1 T2 »
- Erreur « anormale » vis-à-vis du budget indiqué d'erreur (de pseudo distance, de pseudo vitesse, de delta range) émis supposé de distribution normale (c'est-à-dire gaussienne).

### Hypothèses

On considère, conformément à la norme DO-229D pour les défaillances agissant sur les pseudo-distances GPS NAVSTAR, que des évènements comme une triple panne satellites ou une panne simultanée constellation et UMI ont des probabilités d'apparition par heure de vol négligeables vis-à-vis de 10⁻⁹/fh.

Les données provenant de constellations sont supposées indépendantes (antennes indépendantes, récepteurs indépendants, systèmes GNSS indépendants...)

Chacun des traitements (modules 5a à 5f) est apte à fournir une position et une vitesse horizontale avec un rayon de protection à 10⁻⁹ f/h (sans prise en compte des évènements au niveau des UMIs et des constellations pouvant arriver entre 10⁻⁷ et 10⁻⁹/fh).

Un exemple adapté de module de traitement est l'hybridation telle que décrite dans la demande de brevet FR2939900.

Pour chaque module de traitement, un rayon de protection à 10⁻⁷ f/h avec l'hypothèse restrictive *RNP* (rayon noté « R_{RNP}(10⁻⁷) ») est élaboré.

Pour chaque module de traitement, on calcule ensuite le rayon de protection ^{à} 10⁻⁹ f/h avec l'hypothèse restrictive *RNP* (rayon noté « R_{RNP}(10⁻⁹) »).

Ce rayon de protection « R_{RNP}(10⁻⁹)» est à cet effet extrapolé en supposant la répartition de la distribution gaussienne 2D entre les probabilités 10⁻⁷ et 10^{-9,}

Ainsi, on obtient en sortie de chaque module de traitement 5a à 5f une valeur de rayon de protection R_{RNP}(10⁻⁹) (en vitesse comme en position horizontale) à 10⁻⁹ f/h avec l'hypothèse restrictive *RNP*_{.}

### Consolidation

La consolidation des sorties des modules de traitement 5a à 5f mise en oeuvre au niveau du module 6 détermine un rayon de protection consolidé pour le dispositif de fusion-consolidation 4. Cette détermination est effectuée de la façon décrite ci-dessus en référence aux figures 1 et 2, en calculant un cercle qui englobe l'ensemble des solutions réputées valides, c'est-à-dire incluses dans des disques de rayon R_{RNP}(10⁻⁹) en sortie des modules de traitement, pour la valeur 2D consolidée choisi (vitesse ou position).

Ainsi, le module 6 fournit une position (comme une vitesse) horizontale et le rayon de protection « R_{HRNP}(10⁻⁹) » à 10⁻⁹ /fh sans l'hypothèse restrictive *RNP,* mais en négligeant les défaillances simples ou combinées de probabilité d'apparition inférieures à 10⁻⁹/fh .

### Analyse du comportement en cas de défaillances « très rares »

Pour illustrer les opérations possibles de consolidation, les cas présentant une probabilité d'apparition entre 10⁻⁷/fh et 10⁻⁹/fh c.-à-d. HRNP et RNP sont analysés en remplissant les cases du tableau 1 ci-dessus de la manière suivante :
- avec « OK » si les entrées du module de traitement respectent l'hypothèse *RNP*
- avec « KO » si les entrées de module de traitement ne respectent pas l'hypothèse *RNP* tout en respectant l'hypothèse*^{HRNP}*.

Ce tableau évolue selon l'hypothèse de conditions de fonctionnement.

Sous l'hypothèse *RNP* on a le tableau suivant :

| *RNP et H̅R̅N̅P̅* | **GNSS 1** | **GNSS2** |
|---|---|---|
| **UMI 1.1** | OK | OK |
| **UMI 1.2** | OK | OK |
| **UMI 2** | OK | OK |

Sous l'hypothèse HRNP et R̅N̅P̅, en cas de défaillance non détectée localement du système GNSS1 comme par exemple deux satellites en panne, une panne globale de constellation, ou une panne au niveau du récepteur, on a le tableau suivant :

| *HRNP* /GNSS1 | **GNSS 1** | **GNSS2** |
|---|---|---|
| **UMI1.1** | KO | OK |
| **UMI1.2** | KO | OK |
| **UMI 2** | KO | OK |

Sous l'hypothèse HRNP et R̅N̅P̅, en cas de défaillance non détectée (localement) du système GNSS2 comme par exemple deux satellites en panne, une panne globale de constellation, ou une panne au niveau du récepteur, on a le tableau suivant :

| HRNP/GNSS2 | **GNSS1** | **GNSS 2** |
|---|---|---|
| **UMI 1.1** | OK | KO |
| **UMI 1.2** | OK | KO |
| **UMI 2** | OK | KO |

Sous l'hypothèse HRNP et R̅N̅P̅, en cas HRNP UMI T1 on a le tableau suivant :

| HRNP/UMI T1 | **GNSS1** | **GNSS 2** |
|---|---|---|
| **UMI1.1** | KO | KO |
| **UMI1.2** | KO | KO |
| **UMI 2** | OK | OK |

Sous l'hypothèse HRNP et R̅N̅P̅, en cas HRNP UMI T1 ou (et) T2 on a les deux tableaux suivants :

| HRNP/UMI T1.1-T2 | **GNSS1** | **GNSS 2** |
|---|---|---|
| **UMI 1.1** | KO | KO |
| **UMI 1.2** | OK | OK |
| **UMI 2** | KO | KO |

Ou:

| HRNP/UMI T1.2-T2 | **GNSS1** | **GNSS 2** |
|---|---|---|
| **UMI 1.1** | OK | OK |
| **UMI 1.2** | KO | KO |
| **UMI 2** | KO | KO |

Ainsi, sur l'ensemble des 6 modules de traitement disponibles, avec rayons à 10⁻⁹/fh calculés sous l'hypothèse^{RNP}, au moins deux modules (pas forcément identifiés) sont « intègres » car ils respectent les hypothèses liées aux rayons de protection fournis.

La position horizontale vraie, comme la vitesse horizontale vraie, présente donc une probabilité par heure de vol inférieure à 10⁻⁹/fh d'être en dehors de chacun des deux cercles de protection fourni par ces deux (au moins) modules de traitement, chaque cercle étant centré sur la solution fournie.

Donc la probabilité par heure de vol que la position (ou la vitesse) vraie (en un point de l'appareil commun aux calculs des modules) soit en dehors de tout cercle englobant ces six cercles est inférieure 10⁻⁹ y compris en cas très rare de défaillanceHRNP et R̅N̅P̅.

### Détection de défaillances, exclusions possibles et maintenance

La consolidation mise en oeuvre peut être complétée par un traitement permettant la détection de certains modes de défaillance et leurs gestions automatique par exclusion provisoire ou définitive pour la durée de mission de navigations optimales détectées en panne.

À cet effet par exemple, on met en oeuvre au niveau du module 6 un algorithme de FDE (Fault Détection and Exclusion) entre les sorties des six modules de traitement. Cet algorithme détecte et éventuellement isole une panne non indiquée HRNP mais R̅N̅P̅ Il est en outre complété par des sous-traitements mis en oeuvre au niveau de chaque module de traitement 5a à 5f pour détecter d'éventuelles pannes au niveau sous-ensemble matériel (UMI, calculateur, récepteur GNSS).

Les tableaux ci-dessus montrent que les pannes rares HRNP mais R̅N̅P̅ possèdent des signatures particulières : par exemple une panne GNSS1 va impacter toute les modules de traitement exploitant le GNSS1 et pas les autres.

Le traitement FDE des 6 modules exploite ces signatures pour détecter et isoler l'effet des défaillances.

A cet effet, il met par exemple en oeuvre sur l'ensemble des résultats les tests entre solutions valides suivants :
- Les sorties HYB X et HYB Y de deux modules de traitement 5a à 5f sont « cohérentes RNP » (resp. « non cohérentes RNP ») si au moins un point est commun à l'ensemble des solutions à 10⁻⁹ RNP émis par chaque module. Cela revient à tester si la norme 2 entre les deux sorties dépasse ou non la somme des deux rayons de protection plus l'effet des asynchronismes entre ces sorties.
- Les sorties HYB X et HYB Y sont « exclus RNP » » (resp. « non exclues RNP ») si la norme 2 entre les deux solutions dépasse k fois, k supérieur ou égal à 1, la somme des deux rayons de protection plus par exemple l'effet des asynchronismes entre ces sorties.

On notera que ces deux tests ne commutent pas en même temps.

Les tests ci-dessus sont alors utilisés pour déterminer des signatures caractéristiques de certains modes de défaillance.

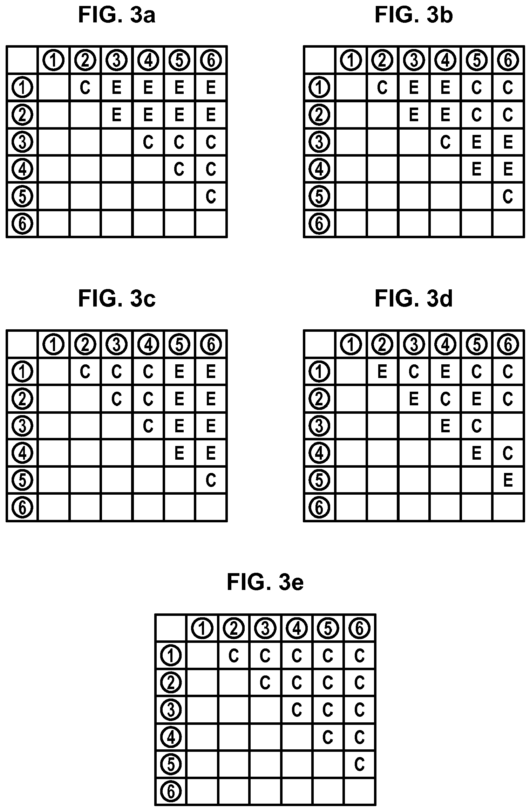

Les signatures de différents types de défaillances sont illustrées sur les tables des figures 3a à 3e.

Les lignes et colonnes 1 à 6 correspondent respectivement aux sorties des modules 5a à 5f.

Les cases marquées C correspondent à des cas de cohérence RNP, tandis que celles marquées E correspondent à des exclusions RNP.

La réponse du tableau 3a est typique d'une panne de l'UMI1.1, celle du tableau 3b d'une panne de l'UMI1.2, celle du tableau 3c d'une panne de l'UMI2 ou d'une panne générale des UMI de type 1 et le tableau 3d enfin d'une panne de type GNSS1 ou GNSS2 ou encore de deux pannes de satellites (GNSS1 ou GNSS2).

La figure 3e est quant à elle typique du cas où il n'y a pas de panne ou une seule panne satellite.

Une fois la signature caractéristique déterminée et détectée par le module de consolidation 6, celui-ci peut selon le cas décider d'isoler les solutions de navigation défaillantes (cas de signatures correspondant à une panne UMI1.1 ou UMI1.2, par exemple) ou encore lancer des tests complémentaires ou faire l'objet de directives imposées.

Dans ce qui vient d'être décrit, on met en oeuvre plusieurs traitements FDE en cascade entre les modules de traitement 5a à 5f et le module 6. D'autres variantes dans lesquelles le traitement FDE est mis en oeuvre sur l'ensemble des mesures fournies en entrée des différents modules de traitement 5a à 5f par les systèmes GNSS et les UMIs peuvent bien entendu également être envisagées.

### Comportement en cas de fonctionnement en « coasting »

Le fonctionnement en « coasting » (sur la base des seules UMI utilisées pour intégrer une navigation en l'absence d'hybridations) sur l'ensemble ou certains des modules de traitement apparait naturellement par exemple lorsque
- un des deux systèmes GNSS1 ou GNSS2 est indisponible,
- un récepteur est en panne
- la bande de fréquence utilisée est brouillée au-delà des capacités du récepteur,
- la configuration géométrique et nombre de satellites accrochés insuffisants pour valider via P-RAIM (et V-RAIM si hybridation en « delta range » ou vitesse) les mesures récepteur.

Dans ce type de fonctionnement :
- les sorties de navigation hybride (sorties « HYB » des modules 5a à 5f), données et rayon de protection, évoluent de manière cohérente en fonction des mouvements
- les valeurs consolidées (position ou vitesse horizontale et RHRNP(10⁻⁹) associé ) ainsi élaborées restent valables.

### Autres configurations de mise en œuvre ou de réalisation

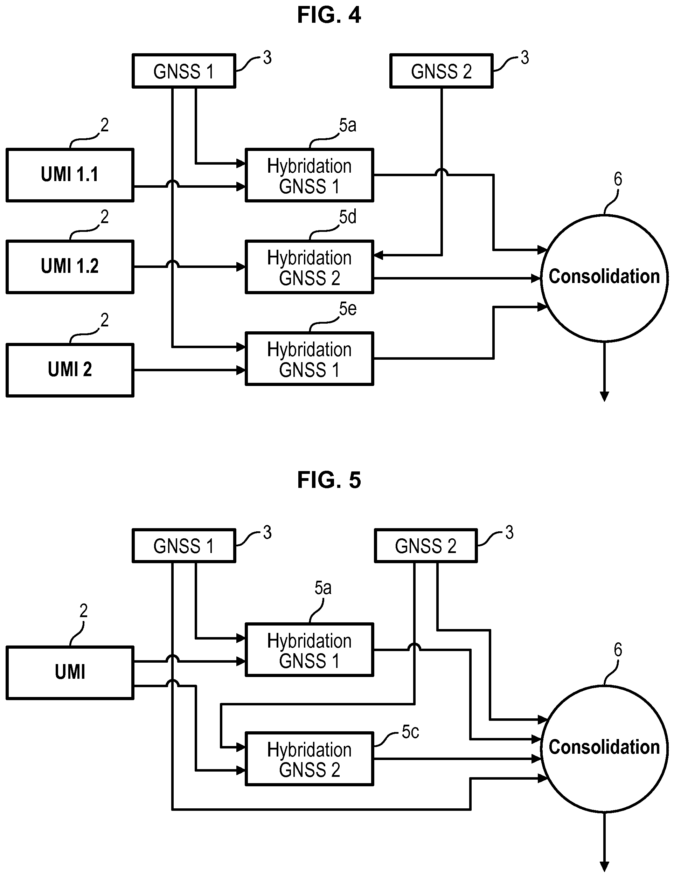

La figure 4 illustre une autre architecture fusion-consolidation possible.

Notamment, dans le mode de mise en oeuvre illustré sur la figure 4, seuls les modules de traitement 5a, 5d et 5e sont conservés.

Avec une telle architecture, les mesures de radionavigation GNSS1 sont utilisées à la fois en entrée des modules de traitement 5a et 5e, mais les autres entrées de l'un et l'autre de ces deux modules sont totalement indépendantes quant à leur défaillance éventuelle, puisqu'il s'agit des mesures en provenance de l'UMI1.1 et de l'UMI2 qui sont de deux types indépendants.

De même, les modules 5a et 5d reçoivent en entrée des mesures en provenance de deux dispositifs de navigation qui ne sont pas indépendants quant à leur défaillance éventuelle, puisqu'ils sont du même type (UMI1.1 et UMI1.2). Toutefois les autres entrées de ces deux modules proviennent quant à elle des dispositifs de navigation (en l'occurrence GNSS1 et GNSS2) indépendants quant à leur défaillance éventuelle.

Cette architecture a l'avantage de permettre d'assurer la même intégrité de la mesure consolidée avec la même probabilité que celle de chacun des modules de traitement, et ce avec une charge de calcul totale divisée par deux par rapport à l'architecture de la figure 1. Elle exige donc une moindre capacité de calcul. La figure 5 illustre une autre architecture fusion-consolidation possible, dans laquelle seuls les modules de traitement 5a, et 5c sont conservés.

Avec une telle architecture, les mesures de radionavigation GNSS1 sont utilisées en entrée du module de traitement 5a, les mesures de radionavigation GNSS2 sont utilisées en entrée du module de traitement 5c.

De même, les modules 5a et 5c reçoivent en entrée des mesures en provenance de deux dispositifs de navigation qui ne sont pas indépendants quant à leur défaillance éventuelle, puisqu'ils sont du même type (UMI1.1 et UMI1.2). Toutefois les autres entrées de ces deux modules proviennent quant à elle des dispositifs de radionavigation (en l'occurrence GNSS1 et GNSS2) indépendants quant à leur défaillance éventuelle.

Cette architecture contrairement à celles présentées en figure 1 et figure 4, n'exige pas des dispositifs de navigation de type différents. Elle est donc plus simple à réaliser que les architectures présentées en figure 1 et 4.

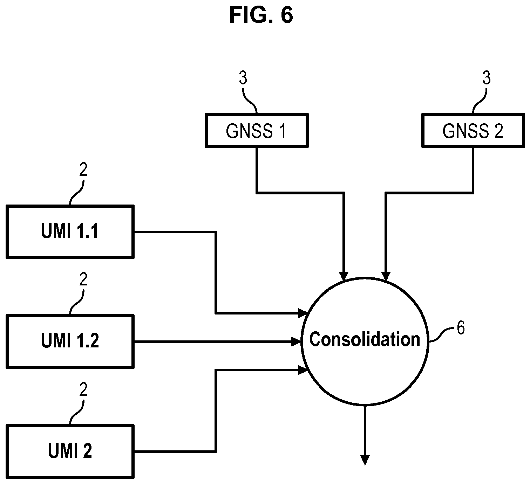

La figure 6 illustre une autre architecture fusion-consolidation possible dans laquelle les modules de traitement sont supprimés et le module de fusion consolidation utilise les mesures qui proviennent des dispositifs de radionavigation GNSS1 et GNSS2 indépendants quant à leur défaillance éventuelle.

Plus généralement, le procédé proposé s'applique à tous systèmes de navigation exploitant des dispositifs de navigation présentant des hypothèses de pannes différentes.

## Revendications

1. Procédé de la détermination d'une information de navigation consolidée dans lequel
- plusieurs dispositifs de navigation indépendants fournissent des données de mesure, lesdits dispositifs indépendants étant des Unités de Mesure Inertielle, UMI, et des récepteurs GNSS;
- les données de mesures de ces dispositifs de navigation sont combinées et traitées par une pluralité de modules de traitement qui élaborent chacun une solution de navigation hybride à partir de données de mesures provenant de plusieurs dispositifs de navigation indépendants, chaque solution de navigation hybride étant générée à partir de données de mesures reçues à partir d'un ensemble différent d'UMI et de récepteurs de radionavigation, un rayon de protection correspondant à une probabilité de défaillance donnée, étant calculé pour chaque solution de navigation hybride ainsi déterminée,
- les solutions de navigation hybrides sont traitées pour fournir une information de navigation consolidée,
**caractérisé en ce qu'**on met en œuvre un contrôle de l'intégrité de l'information de navigation consolidée, ledit contrôle comprenant les étapes de
- détermination, pour une probabilité de défaillance donnée, d'au moins une zone consolidée qui englobe des zones de protection qui sont centrées sur les valeurs de la solution de navigation et qui correspondent aux rayons de protection déterminés pour lesdites solutions de navigation hybrides et pour ladite probabilité de défaillance,
- détermination d'un rayon pour ladite zone consolidée,
ledit rayon étant fourni comme rayon de protection associé à l'information de navigation consolidée pour ladite probabilité de défaillance.

2. Procédé selon la revendication 1, dans lequel lorsque les mesures d'au moins un dispositif de navigation sont utilisées en entrée de deux modules de traitement, les autres dispositifs de navigation dont les mesures sont utilisées en entrée respectivement de l'un et l'autre de ces deux modules de traitement sont choisis de façon à être indépendants quant à leur défaillance éventuelle.

3. Procédé selon la revendication 1, dans lequel lorsqu'au moins deux dispositifs de navigation sont dépendants quant à leur défaillance éventuelle, au moins deux modules de traitement qui utilisent les mesures respectivement de l'un et l'autre de ces dispositifs de navigation sont tels que les autres dispositifs de navigation qu'ils utilisent en entrée sont indépendants quant à leur défaillance éventuelle.

4. Procédé selon la revendication 1, dans lequel après détermination d'un centre de cercle consolidé, on détermine le rayon dudit cercle consolidé comme étant celui d'un cercle englobant, les cercles centrés sur les valeurs de solution en sortie des modules de traitement et dont les rayons sont égaux aux rayons de protection de ceux-ci.

5. Procédé selon la revendication 4, dans lequel le cercle englobant est le cercle de rayon minimal englobant les cercles centrés sur les valeurs de solution en sortie des modules de traitement.

6. Procédé selon la revendication 5, dans lequel on détermine le centre du cercle consolidé comme étant égal à la moyenne, le cas échéant pondérée, des valeurs de solution en sortie des différents modules de traitement.

7. Procédé selon la revendication 1, dans lequel on met en œuvre en sortie des modules de traitement la détection et l'exclusion d'éventuelles défaillances.

8. Procédé selon la revendication 7, dans lequel on met en œuvre sur les sorties des modules de traitement des tests de cohérence en fonction desquels on détecte d'éventuelles défaillances.

9. Procédé selon l'une des revendications 7 ou 8, selon lequel les sorties des tests de cohérence sont analysées pour détecter sur les données correspondant à ces sorties des signatures caractéristiques de certaines défaillances.

10. Procédé selon la revendication 1, dans lequel les dispositifs de navigation commun à un module de traitement sont des UMI ainsi que des récepteurs de radionavigation, et dans lequel un traitement mis en œuvre sur les sorties des modules de traitement ou sur les mesures en entrée de ceux-ci détecte la défaillance d'un ou plusieurs satellite(s) et/ou d'une unité de mesure inertielle et/ou d'un système GNSS et/ou d'un récepteur GNSS et/ou d'un type d'UMI.

11. Procédé selon la revendication 10, selon lequel on met en œuvre au niveau des modules de traitement une détection de panne de matériel UMI.

12. Dispositif de fusion-consolidation comprenant une pluralité de modules de traitement élaborant chacun une solution de navigation hybride à partir de mesures provenant d'un ou plusieurs dispositifs de navigation indépendants, lesdits dispositifs indépendants étant des Unités de Mesure Inertielle, UMI, et des récepteurs GNSS, chaque solution de navigation étant générée à partir de données de mesures reçues à partir d'un ensemble différent d'UMI et de récepteurs de radionavigation, ledit dispositif fusion-consolidation comportant des moyens de traitement qui déterminent pour chaque module de traitement un rayon de protection, correspondant à une probabilité de défaillance donnée, **caractérisé en ce qu'**il comporte un module de consolidation qui, pour une probabilité de défaillance donnée, détermine au moins une zone consolidée qui englobe des zones de protection qui sont centrées sur les valeurs de solution en sortie des modules de traitement et qui correspondent aux rayons de protection déterminés pour ces modules, le rayon de protection dudit dispositif de fusion-consolidation pour ladite probabilité de défaillance étant lui-même déterminé pour correspondre à ladite zone consolidée.

13. Procédé de contrôle de l'intégrité de la valeur d'une information de navigation délivrée par un dispositif de fusion-consolidation comprenant une pluralité de modules de traitements configuré pour élaborer chacun une solution de navigation à partir de mesures provenant d'un ou plusieurs dispositifs de navigation indépendants, le procédé comprenant :
- une détermination, pour chaque module de traitement, d'un rayon de protection, correspondant à une probabilité de défaillance donnée,
le procédé étant **caractérisé en ce qu'**il comprend en outre
- une détermination d'au moins une zone consolidée qui englobe des zones de protection qui sont centrées sur les valeurs de solution en sortie des modules de traitement et qui correspondent aux rayons de protection déterminés pour ces modules,
- une détermination du rayon de protection dudit dispositif de fusion-consolidation pour ladite probabilité de défaillance, pour correspondre à ladite zone consolidée.

## Patentansprüche

1. Verfahren zum Bestimmen einer konsolidierten Navigationsinformation, wobei
- mehrere unabhängige Navigationsvorrichtungen Messdaten bereitstellen, wobei die unabhängigen Vorrichtungen Trägheitsmesseinheiten UMI und GNSS-Empfänger sind;
- die Messdaten dieser Navigationsvorrichtungen von einer Vielzahl von Verarbeitungsmodulen kombiniert und verarbeitet werden, die jeweils eine Hybrid-Navigationslösung auf der Basis von Messdaten erarbeiten, die von mehreren unabhängigen Navigationsvorrichtungen kommen, wobei jede Hybrid-Navigationslösung auf der Basis von Messdaten erzeugt wird, die von einer Einheit empfangen werden, die sich von einer UMI und von Funknavigationsempfängern unterscheidet, wobei ein Schutzradius, der einer gegebenen Ausfallwahrscheinlichkeit entspricht, für jede derart bestimmte Hybrid-Navigationslösung berechnet wird,
- die Hybrid-Navigationslösungen verarbeitet werden, um eine konsolidierte Navigationsinformation bereitzustellen,
**dadurch gekennzeichnet, dass** eine Kontrolle der Integrität der konsolidierten Navigationsinformation durchgeführt wird, wobei die Kontrolle die Schritte umfasst
- Bestimmen, für eine gegebene Ausfallwahrscheinlichkeit, mindestens einer konsolidierten Zone, die Schutzzonen einschließt, die auf den Werten der Navigationslösung zentriert sind und die den für die Hybrid-Navigationslösungen und für die Ausfallwahrscheinlichkeit bestimmten Schutzradien entsprechen,
- Bestimmen eines Radius für die konsolidierte Zone,
wobei der Radius als Schutzradius bereitgestellt wird, der der konsolidierten Navigationsinformation für die Ausfallwahrscheinlichkeit zugeordnet ist.

2. Verfahren nach Anspruch 1, wobei, wenn die Messungen mindestens einer Navigationsvorrichtung in zwei Verarbeitungsmodule eingehend verwendet werden, die anderen Navigationsvorrichtungen, deren Messungen jeweils in das eine und das andere dieser zwei Verarbeitungsmodule eingehend verwendet werden, derart ausgewählt werden, dass sie im Hinblick auf ihren eventuellen Ausfall unabhängig sind.

3. Verfahren nach Anspruch 1, wobei, wenn mindestens zwei Navigationsvorrichtungen im Hinblick auf ihren eventuellen Ausfall abhängig sind, mindestens zwei Verarbeitungsmodule, die die Messungen von jeweils der einen und der anderen dieser Navigationsvorrichtungen verwenden, derart sind, dass die anderen Navigationsvorrichtungen, die sie eingehend verwenden, im Hinblick auf ihren eventuellen Ausfall unabhängig sind.

4. Verfahren nach Anspruch 1, wobei nach Bestimmung eines Zentrums eines konsolidierten Kreises der Radius des konsolidierten Kreises als der eines Kreises bestimmt wird, der die auf den ausgehenden Lösungswerten der Verarbeitungsmodule zentrierten Kreise umschließt und deren Radien gleich den Schutzradien derselben sind.

5. Verfahren nach Anspruch 4, wobei der umschließende Kreis der Kreis mit dem minimalen Radius ist, der die auf den ausgehenden Lösungswerten der Verarbeitungsmodule zentrierten Kreise umschließt.

6. Verfahren nach Anspruch 5, wobei das Zentrum des konsolidierten Kreises als gleich dem gegebenenfalls gewichteten Mittel der ausgehenden Lösungswerte der verschiedenen Verarbeitungsmodule bestimmt wird.

7. Verfahren nach Anspruch 1, wobei von den Verarbeitungsmodulen ausgehend die Ermittlung und der Ausschluss eventueller Ausfälle durchgeführt wird.

8. Verfahren nach Anspruch 7, wobei von den Verarbeitungsmodulen ausgehend Kohärenztests durchgeführt werden, in deren Abhängigkeit eventuelle Ausfälle ermittelt werden.

9. Verfahren nach einem der Ansprüche 7 oder 8, wobei die Ausgaben der Kohärenztests analysiert werden, um anhand der Daten, die diesen Ausgaben entsprechen, charakteristische Signaturen bestimmter Ausfälle zu ermitteln.

10. Verfahren nach Anspruch 1, wobei die Navigationsvorrichtungen, die einem Verarbeitungsmodul gemeinsam sind, UMI sowie Funknavigationsempfänger sind, und wobei durch eine durchgeführte Verarbeitung der Ausgaben der Verarbeitungsmodule oder ihrer eingehenden Messungen der Ausfall von einem oder mehreren Satelliten und/oder von einer Trägheitsmesseinheit und/oder GNSS-System und/oder von einem GNSS-Empfänger und/oder von einem UMI-Typ ermittelt wird.

11. Verfahren nach Anspruch 10, wobei im Bereich der Verarbeitungsmodule eine Pannendetektion der UMI-Technik durchgeführt wird.

12. Fusions-Konsolidierungs-Vorrichtung, die eine Vielzahl von Verarbeitungsmodulen umfasst, von denen jedes eine Hybrid-Navigationslösung auf der Basis von Messungen erarbeitet, die von einem oder mehreren unabhängigen Navigationsvorrichtungen kommen, wobei die unabhängigen Vorrichtungen Trägheitsmesseinheiten UMI und GNSS-Empfänger sind, wobei jede Hybrid-Navigationslösung auf der Basis von Messdaten erzeugt wird, die von einer Einheit empfangen werden, die sich von einer UMI und von Funknavigationsempfängern unterscheidet, wobei die Fusions-Konsolidierungs-Vorrichtung Verarbeitungsmittel aufweist, die für jedes Verarbeitungsmodul einen Schutzradius bestimmen, entsprechend einer gegebenen Ausfallwahrscheinlichkeit, **dadurch gekennzeichnet, dass** sie ein Konsolidierungsmodul aufweist, das für eine gegebene Ausfallwahrscheinlichkeit mindestens eine konsolidierte Zone bestimmt, die Schutzzonen einschließt, die auf den ausgehenden Lösungswerten der Verarbeitungsmodule zentriert sind und die den Schutzradien entsprechen, die für diese Module bestimmt sind, wobei der Schutzradius der Fusions-Konsolidierungs-Vorrichtung für die Ausfallwahrscheinlichkeit selbst bestimmt wird, um der konsolidierten Zone zu entsprechen.

13. Verfahren zur Kontrolle der Integrität des Wertes einer Navigationsinformation, die von einer Fusions-Konsolidierungs-Vorrichtung bereitgestellt wird, umfassend eine Vielzahl von Verarbeitungsmodulen, von denen jedes ausgelegt ist, eine Navigationslösung auf der Basis von Messungen zu erarbeiten, die von einer oder mehreren unabhängigen Navigationsvorrichtungen kommen, wobei das Verfahren umfasst:
- eine Bestimmung, für jedes Verarbeitungsmodul, eines Schutzradius, entsprechend einer gegebenen Ausfallwahrscheinlichkeit,
wobei das Verfahren **dadurch gekennzeichnet ist, dass** es ferner umfasst
- eine Bestimmung mindestens einer konsolidierten Zone, die Schutzzonen umschließt, die auf den ausgehenden Lösungswerten der Verarbeitungsmodule zentriert sind und die den für diese Module bestimmten Schutzradien entsprechen,
- eine Bestimmung des Schutzradius der Fusions-Konsolidierungs-Vorrichtung für die Ausfallwahrscheinlichkeit, um der konsolidierten Zone zu entsprechen.

## Claims

1. A method for determining a consolidated navigation information wherein:
- several independent navigation devices provide measurement data, said independent devices being inertial measurement units, IMU, and GNSS receivers;
- the measurement data of these navigation devices are combined and processed by a plurality of processing modules each elaborating a hybrid navigation solution from measurement data stemming from several independent navigation devices, each hybrid navigation solution being generated from measurement data received from a different assembly of IMU and radio-navigation receivers, a protection radius corresponding to a given failure probability, being calculated for each hybrid navigation solution thereby determined,
- the hybrid navigation solutions are processed to provide a consolidated navigation information,
**characterized in that** an integrity control of the consolidated navigation information is applied, said control comprising the steps of:
- determining, for a given failure probability, at least one consolidated area which encompasses protection areas which are centered on the values of the navigation solution and which correspond to the protection radii determined for said hybrid navigation solutions and for said failure probability.
- determining a radius for said consolidated area, said radius being provided as a protection radius associated with the consolidated navigation information for said failure probability.

2. The method according to claim 1, wherein when the measurements of at least one navigation device are used at the input of two processing modules, the other navigation devices for which the measurements are used at the input respectively of either one of both of these processing modules are selected so as to be independent as to their possible failure.

3. The method according to claim 1, wherein when at least two navigation devices are dependent as to their possible failure, at least two processing modules which use the measurements respectively of either one of these navigation devices are such that the other navigation devices which they use at the input are independent as to their possible failure.

4. The method according to claim 1, wherein, after determining a consolidated circle centre, the radius of said consolidated circle is determined as being that of a circle encompassing, the circles centered on the solution values at the output of the processing modules and for which the radii are equal to the protection radii of the latter.

5. The method according to claim 4, wherein the encompassing circle is the circle of minimum radius encompassing the circles centered on the solution values at the output of the processing modules.

6. The method according to claim 5, wherein the consolidated circle centre is determined as being equal to the average, if necessary weighted average, of the solution values at the output of the different processing modules.

7. The method according to claim 1, wherein detection and exclusion of possible failures are applied at the output of the processing modules.

8. The method according to claim 7, wherein consistency tests according to which possible failures are detected are applied on the outputs of the processing modules.

9. The method according to one of claims 7 or 8, according to which the outputs of the consistency tests are analyzed for detecting on the data corresponding to these outputs, characteristic signatures of certain failures.

10. The method according to claim 1, wherein the navigation devices common to a processing module are IMUs as well as radio-navigation receivers, and wherein a processing operation applied on the outputs of the processing modules or on the measurements at the input of the latter detects the failure of one or several satellite(s) and/or of an inertial measurement unit and/or of a GNSS system and/or of a GNSS receiver and/or of an IMU type.

11. The method according to claim 10, according to which, a detection of a failure of IMU hardware is applied at the processing modules.

12. A merging-consolidation device comprising a plurality of processing modules each elaborating a hybrid navigation solution from measurements stemming from one or several independent navigation devices, said independent devices being inertial measurement units, IMU, and GNSS receivers, each navigation solution being generated from measurement data received from a different assembly of IMU and radio-navigation receivers, said merging-consolidation device including processing means which determine for each processing module, a protection radius corresponding to a given failure probability, **characterized in that** it includes a consolidation module which determines, for a given failure probability, at least one consolidated area which encompasses protection areas which are centered on the solution values at the output of the processing modules and which correspond to the determined protection radii for these modules, the protection radius of said merging-consolidation device for said failure probability being itself determined so as to correspond to said consolidated area.

13. A method for integrity control of the value of a navigation information delivered by a merging-consolidation device comprising a plurality of processing modules each elaborating a navigation solution from measurements stemming from one or several independent navigation devices, the method comprising:
- determining, for each processing module, a protection radius, corresponding to a given failure probability,
the method being **characterized in that** it further includes
- determining at least one consolidated area which encompasses protection areas which are centered on the solution values at the output of the processing modules and which correspond to the protection radii determined for these modules.
- determining the protection radius of said merging-consolidation device for said failure probability, so as to correspond to said consolidated area.
